# EUROPEAN PATENT SPECIFICATION

(11) **EP 1 551 005 B1**
(45) Date of publication and mention of the grant of the patent: **27.11.2013**
(21) Application number: 04106785.1
(22) Date of filing: 21.12.2004
(51) Int. Cl.: G10H 1/00, G06F 1/00

(54) **Music apparatus with selective decryption of usable component in loaded composite content**
Musikalische Vorrichtung mit selektiver Entschlüsselung von nutzbaren Teilen eines geladenen zusammengesetzten Inhalts
Appareil musical comprenant un décryptage selectif des parties utiles d'un signal composite chargé

(30) Priority: 26.12.2003 JP 2003435636
(43) Date of publication of application: 06.07.2005
(73) Proprietor: YAMAHA CORPORATION, Hamamatsu-shi Shizuoka-ken (JP)
(72) Inventor: Haruyama, Kazuo, 430-8650, Hamamatsu-shi (JP); Okamoto, Tetsuo, 430-8650, Hamamatsu-shi (JP); Yanase, Tsutomu, 430-8650, Hamamatsu-shi (JP); Imaizumi, Tsutomu, 430-8650, Hamamatsu-shi (JP)
(74) Representative: Ascherl, Andreas

(56) References cited:
- EP-A- 0 843 449
- EP-A- 1 172 796
- WO-A-02/23521
- US-A- 5 636 276
- US-A1- 2002 029 228
- US-A1- 2002 144 587
- MARC A KAPLAN: "IBM Cryptolopes, SuperDistribution and Digital Rights Management" IBM RESEARCH, 30 December 1996 (1996-12-30), XP002132994 INTERNET
- PATENT ABSTRACTS OF JAPAN vol. 2002, no. 06, 4 June 2002 (2002-06-04) & JP 2002 062884 A (YAMAHA CORP), 28 February 2002 (2002-02-28)

## Description

### BACKGROUND OF THE INVENTION

### [Technical Field]

This invention relates to a music content using system that provides the convenience of using a complex music content including encrypted multiple music content materials.

### [Background art]

Systems for copyright protection of music performance data (music content) are conventionally known, as disclosed in Patent Document 1, in which only electronic musical instruments (electronic music machines) that know an encryption key can decrypt and use the encrypted performance data to ensure security. Patent Document 1 is Japanese patent laid-open application No. 2003-208163.

On the other hand, there are provided systems for allowing users to enjoy variety of music at a time by providing a composite music content including multiple content materials, such as MIDI performance data and logic score data, to electronic music machines, and allowing the electronic music machines to use the multiple content materials.

In this case, the electronic music machines may not be able to use all the content materials contained in each composite music content file provided, depending on the type and capability of electronic music machine. For example, some electronic music machines may be able to reproduce MIDI performance data from the composite content file including the MIDI performance data as content materials, but not be able to use the logic score data also contained in the composite content because of lack of monitor for displaying a musical score. In such a case, if the composite music content file is encrypted for security, the electronic music machines will have to decrypt all the encrypted content materials including those unusable on the electronic music machines, thereby wasting time on unnecessary decryption.
EP 1 172 796 A1 discloses a data reproducing apparatus. Therein, the data (MIDI, audio, text and images) to be received is SMF-formatted data including event information and event executing timing. Data is assorted on a kind-by-kind basis upon a delta time, and the assorted data are respectively reproduced in a MIDI reproducing section (11), an audio reproducing section, a text reproducing section and an image reproducing section. Because each of the data is reproduced in a given timing according to the predetermined delta time, synchronization can be easily provided between different kinds of data. Thus the complex contents of SMF format containing various kinds of event data including regular MIDI events, audio events, image events and so on are reproduced while successively decoding these events. The decoding and reproduction of various events are performed in parallel manner. Decoding of some kind of event (for example, audio event) may be skippes while decoding the remaining kinds of events. However, the the complex contents of SMF format are reproduced in synchronization with delta time regardless of skipping decoding of some kind of events.
Marc A. Kaplan: "IBM Cryptolopes, SuperDistribution and Digital Rights Management" (1996) discloses encoding different types of content data separately using different encryption keys. Content files to be decrypted are selected by the user.

### SUMMARY OF THE INVENTION

This invention has been made in view of the foregoing situation, and it is an object of the invention to provide a music content using system capable of quickly using a composite music content file including two or more encrypted music content materials.

According to the main features of the invention, there is provided a music apparatus according to claim 1.
There is also provided a program according to claim 4 and a method according to claim 5.

Advantageous embodiments of the invention may be configured according to claims 2 and 3.

In the music content using system according to the invention, when the composite music content file including the multiple kinds of content materials, each encrypted individually, is used on various music content using apparatuses or music information processing apparatuses, only a content material(s) usable on each electronic music machine is decrypted and used.

According to the invention, each electronic music machine (music content using apparatus or music information processing apparatus) decrypts only a desired kind(s) of content material(s) usable on the electronic music machine. In other words, since other kinds of unusable content materials are not decrypted, the time required for decryption can be reduced.

Further, the multiple kinds of content materials included in the composite music content file are arranged in the composite music content file in a predetermined and fixed order. Therefore, each electronic music machine decrypts only the content material(s) arranged in a specific location(s) corresponding to the content using capability of the electronic music machine. This makes possible quick use of a desired content material(s) in such a simple manner as to decrypt only the content materials arranged in specific locations in the music content file.

On the other hand, as mentioned above, when the order of the arrangement of the multiple kinds of content materials is not fixed, each electronic music machine determines whether each content material included in the composite music content file is usable on the electronic music machine, and decrypts only the content material(s) determined to be usable. This also makes possible quick use of content materials even when the locations of the content materials in the composite music content file are uncertain.

### BRIEF DESCRIPTION OF THE DRAWINGS

Fig. 1 is a block diagram showing the hardware structure of a music content using system according to a preferred embodiment of the present invention.
Fig. 2 is a diagram illustrating an example of the format of a composite music content used in the music content using system according to the embodiment of the invention.
Fig. 3 is a flowchart illustrating an example of the operation for using a music content according to the embodiment of the present invention.
Fig. 4 is a flowchart illustrating another example of the operation for using a music content.

### DETAILED DESCRIPTION OF THE INVENTION

Preferred embodiments of the present invention will now be described with reference to the accompanying drawings. The embodiments are just examples of the invention and they will therefore be apparent to those skilled in the art that many modifications and variations may be made without departing from scope of the appended claims.

### [System Overview]

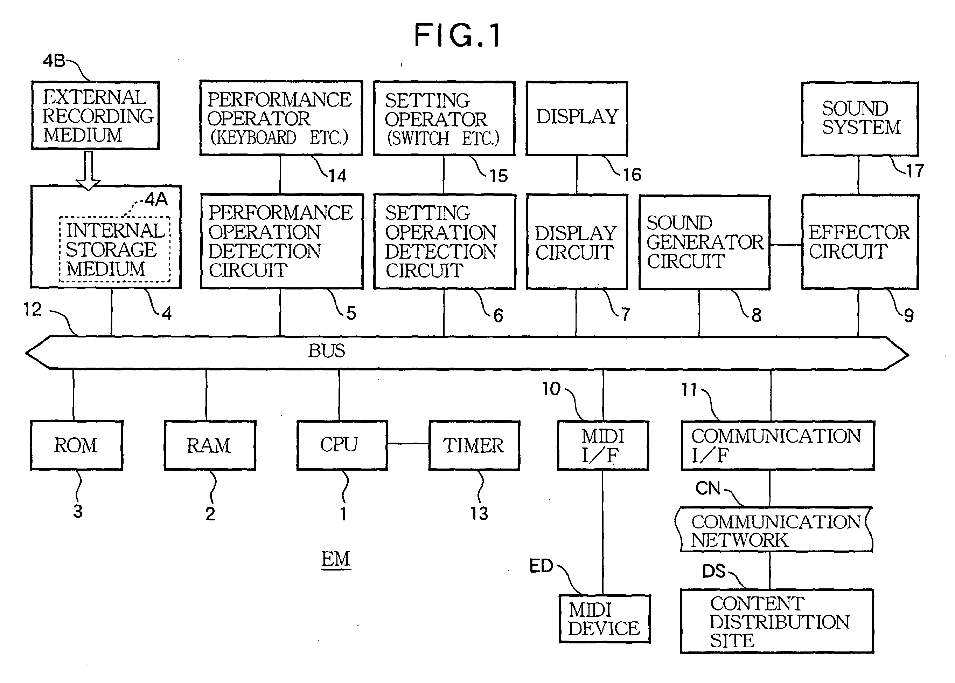

Fig. 1 is a block diagram showing the hardware structure of a music content using system according to one preferred embodiment of the invention. In the example shown, a music content using apparatus EM that forms the main part of the system is a music information processing apparatus capable of processing music information, such as an electronic musical instrument or a personal computer (PC) with a performance operation section and a sound output section, called an electronic music machine. Such an electronic music machine EM includes a central processing unit (CPU) 1, a random access memory (RAM) 2, a read only memory (ROM) 3, an external memory unit 4, a performance operation detection circuit 5, a setting operation detection circuit 6, a display circuit 7, a sound generator circuit 8, an effector circuit 9, a MIDI interface (I/F) 10, and a communication interface (I/F) 11. These elements 1 to 11 are connected to one another through a bus 12.

The CPU 1 performs various kinds of music information processing including music content using processing in response to clocks from a timer 13 according to various control programs including music content using programs. The RAM 2 is used as a working area for temporary storage of various kinds of data necessary for these kinds of processing. Prestored in the ROM 3 are not only various control programs and parameters, or music information, necessary for these kinds of processing, but also machine number information uniquely assigned to the electronic music machine EM.

The external memory unit 4 includes an internal storage medium drive for driving an internal storage medium 4A such as a hard disk (HD), and external storage medium drives for driving various kinds of portable storage media 4B, such as a compact disk read only memory (CD-ROM), a flexible disk (FD), a magneto-optical (MO) disk, a digital versatile disk (DVD), and a small memory card like Smart Media (trademark). The internal storage medium 4A can store music information like music contents and control programs acquired from a music content distribution server DS and the like. The external storage media 4B can also store information acquired by the machine EM. In this case, however, information requiring permission such as a music content is recorded according to predetermined conditions.

The external storage media 4B include specific external recording media (specific media) with music contents or music content using programs prerecorded on them. The specific media each have a unique media number, respectively, from which the music contents or the music content using programs can be introduced to the machine EM through each of the external storage medium drives.

The performance operation detection circuit 5 detects the operating state of each performance operator or control 14, such as a keyboard or wheel, to introduce performance information to the machine EM according to the detected operating state. The performance operation detection circuit 5 and the performance operators 14 constitute the performance operation section. The setting operation detection circuit 6 detects the operating state of each setting operator or control 15, such as a character/numeral cursor key, a panel switch, or a mouse, to introduce setting information to the machine EM according to the detected operating state.

The display circuit 7 drives the display 16 for various screens or various indicators (lamps), and controls these display/lighting states in accordance with instructions from the CPU 1. These elements 7 and 16 constitute display output section that aids the display of data in response to the operating state of each operator or control 14, 15. For example, music information such as performance data (MIDI data) stored in the storage section 3, 4 can be edited using the display output section. The display output section may also have additional functions for some types of electronic music machines EM, including the function of displaying image data of a musical score or the like included in the music information or music content on the screen of the display 16, and the function of guiding performance according to performance-aiding data.

The sound generator circuit 8 generates a tone signal corresponding to performance data from the performance operator 14 or the memory means 3, 4. The effector circuit 9 having a DSP for effect impartment gives predetermined effects to the tone signal. A sound system 17 connected to the effector circuit 9 includes a D/A converter, amplifier, and a speaker to generate sound based on the effect-imparted tone signal. These elements 8, 9, and 17 constitute a sound output section. The sound output section may also have an audio data processing function for some types of electronic music machines EM. In this case, an audio signal corresponding to audio data (waveform data) included in the music information from the storage section 3, 4 can be imparted with an effect(s) and outputted to the sound system 17.

Further, some types of electronic music machines EM may have printing function and provide a printing section with a printing circuit and a printer (not shown) as an output device in addition to the display output section 7, 16, and the sound output section 8, 9, 17. In this case, printing data such as a musical score included in the music information or music content can be printed on the printer.

The MIDI I/F 10 is connected to another electronic musical instrument (MIDI device) ED so that the music information can be exchanged between the electronic music machine EM and the electronic musical instrument ED. The communication I/F 11 is connected to a communication network CN such as the Internet so that music contents and various control programs for using the music contents can be distributed from one or more music content distribution servers DS and used on the electronic music machine EM.

Each of the music content distribution servers DS has substantially the same hardware structure as the electronic music machine EM shown in Fig. 1. As not illustrated in detail here, the music content distribution server DS may not include the performance operation section 5, 14, the sound output section 8, 9, 17, and the MIDI I/F 10, etc.

### [Data Format of Music content]

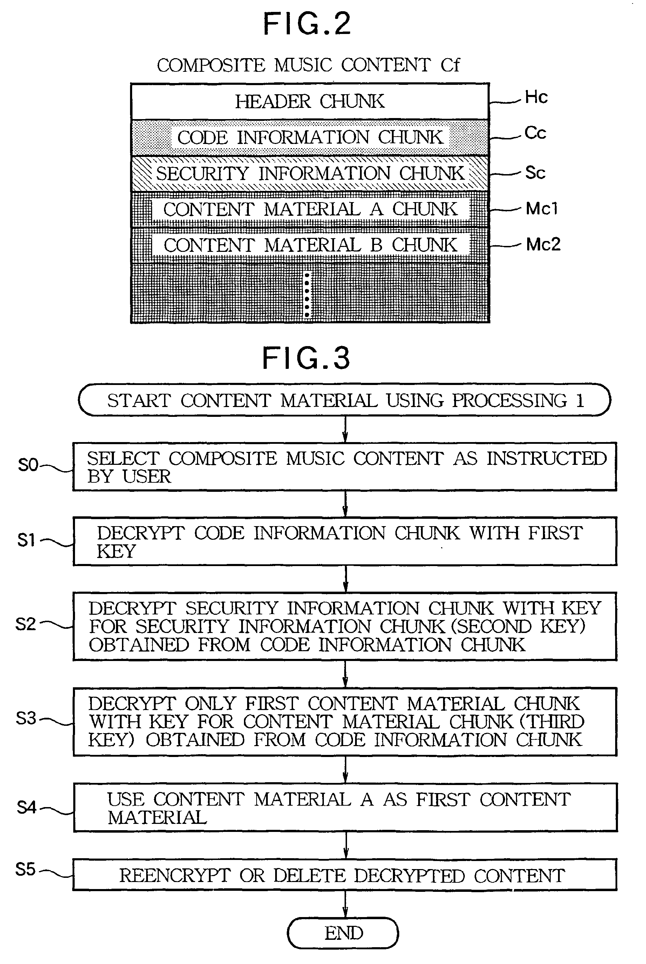

Fig. 2 shows the data format of a music content used in the music content using system according to the embodiment of this invention. An outline of the features of the music content using system will be described in brief using Fig. 2. A composite music content file Cf used in this system includes multiple kinds of content materials A, B, ... each encrypted individually as indicated by different hatching. For example, the composite music content is a bundle of different contents designed for one music piece, such as MIDI performance data of the music piece, logical score data of the same music piece, and audio data of the same music piece. Generally, electronic music machines are diverse in capabilities of using music data. Some music machines may be equipped with monitors for using the logical score data, while other music machines may lack the capability of using the logical score data. Stated otherwise, the content materials includes a usable content material which matches with the capability of the electronic music machine EM and an unusable content material which does not match with the capability of the electronic music machine EM. When the composite music content file Cf is used on each electronic music machine EM, only a content material(s) usable on the machine are selected and decrypted from the composite music content file Cf. In the embodiment, the order of the arrangement of the multiple kinds of content materials A, B, ... in the composite music content file Cf is fixed in advance according to the order of content material chunks Mc1, Mc2, ... so that only a content material(s) in a specific location(s) corresponding to the content using function(s) of the machine will be decrypted.
In an alternative, the order of the arrangement of the content materials is unspecified. Therefore, it is determined for each of the content material chunks Mc1, Mc2, ... whether each content is usable on the machine to decrypt only the content material(s) determined to be usable.

The following describes the data format and the system operation in more detail. Music contents used in this system include a content file Cf called the "composite music content." As shown in Fig. 2, the composite music content file Cf includes multiple kinds of music content materials each encrypted individually. Such a composite music content file Cf can be distributed from the music content distribution server DS and stored on the internal storage medium 4A. Alternatively, it may be recorded on one of portable external recording media (specific media) usable on the electronic music machine EM.

The composite music content file Cf consists of a plurality of chunks encrypted in a hierarchical fashion, including a header chunk Hc, a code information chunk Cc, a security information chunk Sc, and a plurality of content material chunks Mc1, Mc2, ...

The header chunk Hc describes header information in plaintext or non-encrypted form, such as the content name of the composite music content file Cf, the total number of bytes, the number of chunks, etc. On the other hand, the contents of the other chunks Cc, Sc, Mc1, Mc2, ... are encrypted with predetermined keys (encryption keys), respectively, as indicated by different hatching.

The code information chunk Cc is encrypted with a first encryption key (hereinafter also called "the first key"). The first encryption key is, for example, a machine unique key uniquely assigned to the electronic music machine EM, or a media unique key unique to each of predetermined specific external recording media (specific media). The code information chunk Cc describes information (code information) related to the ciphers, or codes, of the other chunks Sc, Mc1, Mc2, ... lower in hierarchy than the code information chunk Cc. For example, the code information describes that the security chunk Sc can be decrypted with a second encryption key and each of the content material chunks Mc1, Mc2, ... can be decrypted with a third encryption key, etc.

The security chunk Sc is encrypted with a second encryption key for the security information chunk (hereinafter also called "the second key") defined in the code information chunk Cc. The security information chunk Sc describes information (security information) defining security conditions for using each of the content materials Mc1, Mc2, ... In other words, the security information represents the limiting conditions for using the content to instruct whether to enable or disable (whether to permit or not permit) each of content using items, such as replay (sound replay, musical score display), editing, duplicate (copying), and printing.

Each of the content material chunks Mc1, Mc2, ... is encrypted with a third encryption key (hereinafter also called "the third key") defined in the code information chunk Cc. The third encryption key used to encrypt and decrypt each of the content material chunks Mc1, Mc2, ... may be a common key for all the content material chunks, or a different key for each content material. A common key may also be used as the second encryption key and the third encryption key.

Each of the content material chunks Mc1, Mc2, ... includes real data that form an actual part of each type of content material, such as MIDI performance data, logic score data, or audio data. For example, the first content material chunk Mc1 includes MIDI performance data as the content material A, while the second content material chunk Mc2 includes logic score data as the content material B. The same kind of content materials may be included in two or more content material chunks, such as a case where a piece of MIDI performance data is recorded in the first content material chunk Mc1 and another piece of MIDI performance data is recorded in the second content material chunk Mc2.

The kind of usable content materials A, B, ... in such a composite music content file Cf varies according to the type of electronic music machine EM. For example, an X type electronic music machine EMx as a high-end model can use both the content material A (MIDI performance data) and the content material B (logic score data), while a Y type electronic music machine EMy as a low-end mode can use only the content material A (MIDI performance data).

In the embodiment of the invention, the content materials A, B, ... in the composite music content file Cf are arranged in a predetermined, fixed-order according to the order of the multiple content material chunks Mc1, Mc2, ... Based on the order of the content materials A, B, ..., the content using programs for each electronic music machine EM are preset according to the type of the machine to decrypt only the material chunks including usable content materials. In the above example, the X type electronic music machine EMx can decrypt the first and second content material chunks Mc1, Mc2 including usable content materials A (MIDI performance data) and B (logic score data), while the Y type electronic music machine EMy can decrypt only the first content material chunk Mc1 including the content material A (MIDI performance data) as the usable content material.

On the other hand, in an alternative example, the order of the arrangement of the content materials A, B, ... in the composite music content file Cf is unspecified or irrelevant to the order of the multiple content material chunks Mc1, Mc2, ... In this case, the security information chunk Sc in the composite music content file Cf describes material type information representing each of the content materials A, B, ... in each of the content material chunks Mc1, Mc2, ... as part of security information. The electronic music machine EM checks the contents of the material type information to determine whether each of the content material chunks Mc1, Mc2, ... includes a content material usable on the machine EM. Then, based on the determination results, the electronic music machine EM decrypts only the content material chunk(s) corresponding to the usable content material(s). Alternatively, part of each content material (e.g., the headmost part) may be described in plaintext or non-encrypted form so that the plaintext part describing the material type information will be used to determine whether the content material is usable.

### [Example of Processing Flow of the Embodiment]

Fig. 3 is a flowchart of "content material using processing 1" representing an example of processing for using a music content according to the embodiment of the invention. This processing flow shows the operation of the above-mentioned Y type electronic music machine EMy. In the embodiment, the content materials A, B, ... in the composite music content file Cf are arranged in the content material chunks Mc1, Mc2, ..., respectively, in fixed orders which are predetermined correspondingly to different capabilities required for using the content materials. The electronic music machine EMy automatically identifies the usable content material arranged at a particular order predetermined in correspondence to the capability of the electronic music machine EMy. For example, the Y type electronic music machine EMy that can use only the content material A decrypts only the first material chunk Mc1 selected from the material chunks Mc1, Mc2, ... to read only the first material chunk Mc1 including the content material A without decrypting the other material chunks Mc2, ...

In Fig. 3, at step S0, a particular composite music content is selected according to instruction by the user from a plurality of composite music contents stored in the internal storage medium 4A or a specific portable external storage medium 4b (one of specific media) of the memory unit 4. Then the selected composite music content file Cf is loaded onto the RAM 2 from the internal storage medium 4A or the specific portable external storage medium 4B of the memory unit 4, the type Y electronic music machine EMy performs the content material using processing 1 to display the content name and the like on the screen of the display 16 according to the header information of the header chunk Hc in the composite music content file Cf. Then the machine EMy performs the following processing steps S1 to S5.

In step S1, the code information chunk Cc is first decrypted with the first key to determine the second and third keys for decrypting the security information chunk Sc and the content material chunks Mc1, Mc2, ..., respectively. Then, in step S2, the security information chunk Sc is decrypted with the second key, or key for the security information chunk, obtained from the code information chunk Cc.

Further, in step S3, only the first content material chunk Mc1 is decrypted with the third key, or key for the content material chunks, obtained from the code information chunk Cc, to read the content material A (performance data) from the content material chunk Mc1. In the subsequent step 4, the decrypted content material A is used as defined in the limiting conditions in the security information of the security information chunk Sc decrypted in step S2.

For example, if the security information dictates that the content material A decrypted in step S3 is "replayable," sound will be emitted through the sound output section 8, 9, 17 based on the performance data of the content material A. If the security information dictates that it is "editable," it will mean that the performance data of the content material A can be edited. Further, if it is "replicable," it will mean that the content material A can be encrypted by a predetermined encryption system and copied to a licensed external recording medium 4A.

After completion of using the content material A as the first content material, the procedure goes to the final step S5. In step S5, if the content material A needs to be restored onto the internal storage medium 4A after being edited or processed in the content using step S4, the composite music content file Cf with the chunks from the chunk Cc to the chunk Mc1 that have been decrypted and expanded on the RAM 2 is re-encrypted to prevent unauthorized use and stored on the internal storage medium 4A. Then, the composite music content file Cf is deleted from the RAM 2 to prevent a careless leakage of the content from the RAM 2. After completion of the reencryption and deletion processing, the content material using processing 1 is ended.

If the X type electronic music machine EMx, which can use the content materials A and B, performs the content material using processing 1 according to the embodiment, it will also decrypt the second content material chunk Mc2 in step S3, though not shown in Fig. 3, after decrypting the first content material chunk Mc1. Then, in step S4, the content materials A and B of the first and second content material chunks are used.

Further, even in the case of an electronic music machine EM of any type that can use content materials included in three or more content material chunks, the content materials usable on the machine and the content material chunks that include the content materials are known beforehand. In this case, all the content material chunks usable on the machine are decrypted from the composite music content file Cf in step S3 of Fig. 3 in the same manner as in the type X electronic music machine EMx. Then, in the next step S4, processing for using the content materials included in the decrypted content material chunks is performed.

### [Example of Processing Flow of an alternative example]

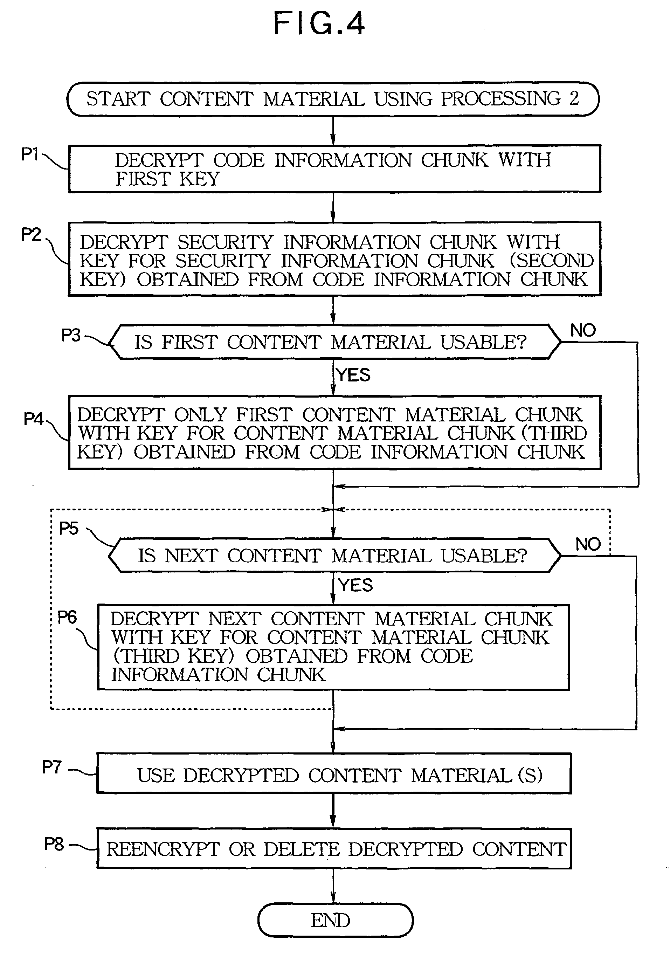

Fig. 4 is a flowchart of "content material using processing 2" representing an example of processing for using a music content according to this alternative example. This processing flow is applied in common to electronic music machines EM, including the above-mentioned type X and Y electronic music machines EMx and EMy, in the case where the composite music content file Cf has two music content material chunks Mc1 and Mc2. In this flow example, it is uncertain which music material in the music content material file Cf is arranged in each of the first and second content material chunks Mc1, Mc2. Therefore, it is determined whether each of the content materials in the material chunks Mc1 and Mc2 is usable on the electronic music machine EM to decrypt the content material(s) determined to be usable. In this case, any unusable content material is not decrypted.

In Fig. 4, when the composite music content file Cf is loaded onto the RAM 2 to start the content material using processing 2, the electronic music machine EM of type X or type Y decrypts the code information chunk Cc with the first key in the first step P1 in the same manner as in the flow of Fig. 3 to determine the second and third keys for decrypting the security information chunk Sc and the content material chunks Mc1, Mc2, ..., respectively. Then, in step P2, the security information chunk Sc is decrypted with the second key (key for the security information chunk) obtained from the code information chunk Cc.

In the subsequent step P3, it is determined that the content material included in the first content material chunk Mc1 is type A according to the material type information included in the security information of the security information chunk Sc decrypted in step P2 to determine whether the content material A is usable on the electronic music machine EM.

If it is determined that the content material A in the first content material chunk Mc1 is usable on the machine like on the type X or Y electronic music machine EMx or EMy (if YES in P3), the procedure goes to step P4. Then, in step P4, the first content material chunk Mc1 is decrypted with the third key (key for the content material chunks), obtained from the code information chunk Cc, to read the content material A (performance data) from the first content material chunk Mc1.

After the first content material chunk is decrypted (P4), or when it is determined that the content material A in the content material chunk Mc1 is unusable on the electronic music machine EM (when No in P3), the procedure goes to step P5. Then, in step P5, it is determined that the content material included in the second content material chunk Mc2 is type B according to the material type information to determine whether the content material B is usable on the electronic music machine EM.

If it is determined that the content material B in the second content material chunk Mc2 is usable on the machine like on the type X electronic music machine EMx (if YES in P5), the procedure goes to step P6. Then, in step P6, the second content material chunk Mc2 is decrypted with the third key, or key for the content material chunks, obtained from the code information chunk Cc, to read the content material B (logic score data) from the second content material chunk Mc2.

After the second content material chunk is decrypted (P6), or when it is determined that the content material B in the second content material chunk Mc2 is unusable on the machine EM like on the type Y electronic music machine EMy (when No in P5), the procedure goes to step P7.

In step P7, each of the decrypted content materials is used according to the security information in the security information chunk Sc decrypted in step P2. For example, in the case of the type Y electronic music machine EMy, only the content material A (performance data) decrypted in step P4 is used according to the contents of the security information. Meanwhile, in the case of the type X electronic music machine EMx, both the content materials A and B decrypted in steps P4 and P6 are used according to the contents of the security information.

After completion of using the content material(s) in step P7, the procedure goes to the final step P8. In step P8, when the content needs to be restored onto the internal storage medium 4A to prevent a careless leakage of the decrypted content, the composite music content file Cf with the material chunks including the usable content material(s) that have been decrypted and expanded on the RAM 3 is reencrypted and restored on the internal storage medium 4A. Then, the composite music content file Cf is deleted from the RAM 3, and the content material using processing 2 is ended.

When the composite music content file Cf has three or more music content material chunks Mc1, Mc2, ..., the content material using processing 2 is applied in common to electronic music machines EM of any type, including the electronic music machines EMx and EMy, by changing part of the procedure as indicated by the broken lines. In other words, after the second content material chunk Mc2 is decrypted (P6), or when it is determined that the content material B in the content material chunk Mc2 is unusable (when No in P5), the procedure returns to step P5 as indicated by the broken lines.

In this case, in step P5, it is determined, in the same manner described above, whether a content material in the subsequent, third content material chunk Mc3 is usable on the electronic music machine EM. The procedure returns to step P5 directly or via step P6, depending on the determination result in P5, thus repeating the processing step P5. After completion of determination of the last content material chunk (when NO in P5 or via P6), the procedure goes to step P7 to use the content materials decrypted in steps P4 and P6.

Thus, in the alternative example, since the locations of the content materials A, B, ... in the composite music content Cf are uncertain, it is first determined whether each content material included in each content material chunk Mc1, Mc2, ... is usable on each electronic music machine EM. Then, only the chunks including usable content materials are decrypted without decrypting the other chunks including unusable content materials.

### [Other Various Embodiments]

While the preferred embodiment of the invention have been described, they can be modified in various ways. For example, the aforementioned embodiments assume that each chunk in the composite music content file is encrypted by the same encryption system using the same or different encryption key for each chunk. However, the present invention is not limited to the embodiments, and each chunk may be encrypted by an encryption system different from that for another chunk.
In the embodiment; the content materials are arranged in the predetermined order of first MIDI performance data, second logical score data and so on. However, the invention is not limited to this specific order. The order of arranging the content materials may be predetermined differently. However, it should be noted that the order must be predetermined commonly to all the electronic musical machines compliant to the inventive system.

## Claims

1. A music apparatus having a capability of using a composite music content (Cf), comprising:
a storage section (2, 4) that is adapted to store a file of the composite music content (Cf) composed of a plurality of content materials (Mc1, Mc2), and
a using section that is adapted to use only a usable content material (Mc1, Mc2) which matches with the capability of the music apparatus among the plurality of the content materials (Mc1, Mc2) and not to use an unusable content material (Mc1, Mc2) which does not match with the capability of the music apparatus among the plurality of the content materials (Mc1, Mc2),
**characterized**
**in that** each of the content materials (Mc1, Mc2) is encrypted individually;
said music apparatus further comprises
a decrypting section, and
an identifying section that is adapted to identify the usable content material (Mc1, Mc2) among the plurality of the content materials (Mc1, Mc2) of the composite music content (Cf) stored in the storage section (2, 4) for controlling the decrypting section to selectively decrypt only the usable content material (Mc1, Mc2) identified by the identifying section while not decrypting the unusable content material (Mc1, Mc2), thereby enabling quick use of the composite music content (Cf) by the using section while reducing the time required for decryption of the music composite content (Cf) by the decrypting section,
wherein the storage section (2, 4) is adapted to store the file of the composite music content (Cf) such that the plurality of the content materials (Mc1, Mc2) are arranged in orders predetermined correspondingly to different capabilities required for using the content materials, wherein the identifying section is adapted to automatically identify the usable content material (Mc1, Mc2) arranged at a particular order predetermined in correspondence to the capability of the music apparatus,
and wherein the identifying section is adapted to determine whether each of the plurality of the content materials (Mc1, Mc2) matches with the capability of the music apparatus so as to identify the usable content material among the plurality of the content materials.

2. The music apparatus according to claim 1, wherein the storage section is adapted to store the composite music content composed of the plurality of the content materials which are encrypted by a code key set commonly to the plurality of the content materials.

3. The music apparatus according to claim 1, wherein the storage section is adapted to store the composite music content composed of the plurality of the content materials which are encrypted by code keys set differently to the plurality of the content materials.

4. A program for use in a music apparatus having a processor (1) and a storage section (2, 4) storing a file of a composite music content (Cf) composed of a plurality of content materials (Mc1, Mc2), the content materials (Mc1, Mc2) of the composite music content (Cf) stored in the storage section (2, 4) including a usable content material (Mc1, Mc2) which can be used by the music apparatus and an unusable content material (Mc1, Mc2) which is not used by the music apparatus, the program being executable by the processor (1) for causing the music apparatus to perform a method comprising the step of using the decrypted usable content material;
**characterized**
**in that** each of the content materials (Mc1, Mc2) is encrypted individually, the music apparatus being capable of using at least one of the content materials (Mc1, Mc2) of the composite music content (Cf) after decryption; and
**in that** the method further comprises the steps of:
identifying the usable content material (Mc1, Mc2) among the plurality of the content materials (Mc1, Mc2) of the composite music content (Cf) stored in the storage section (2, 4);
selectively decrypting only the identified usable content material (Mc1, Mc2) while not decrypting the unusable content material (Mc1, Mc2), thereby enabling quick use of the composite music content (Cf) while reducing the time required for decryption of the music composite content (Cf),
wherein the storage section (2, 4) the file of the composite music content (Cf) is stored such that the plurality of the content materials (Mc1, Mc2) are arranged in orders predetermined correspondingly to different capabilities required for using the content materials, wherein the usable content material (Mc1, Mc2) arranged at a particular order predetermined in correspondence to the capability of the music apparatus is automatically identified,
and wherein it is determined whether each of the plurality of the content materials (Mc1, Mc2) matches with the capability of the music apparatus so as to identify the usable content material among the plurality of the content materials.

5. A method of using a composite music content (Cf) in a music apparatus having a storage section (2, 4) storing a file of a composite music content (Cf) composed of a plurality of content materials (Mc1, Mc2), the content materials of the composite music content (Cf) including a usable content material (Mc1, Mc2) which can be used by the music apparatus and an unusable content material (Mc1, Mc2) which is not used by the music apparatus, the method comprising the step of using the decrypted usable content material;
**characterized**
**in that** each of of the content materials (Mc1, Mc2) is encrypted individually, the music apparatus being capable of using at least one of the content materials (Mc1, Mc2) of the composite music content (Cf) after decryption, and
**in that** the method further comprises the steps of:
identifying the usable content material (Mc1, Mc2) among the plurality of the content materials (Mc1, Mc2) of the composite music content (Cf) stored in the storage section (2, 4);
selectively decrypting only the identified usable content material (Mc1, Mc2) while not decrypting the unusable content material (Mc1, Mc2), thereby enabling quick use of the composite music content (Cf) while reducing the time required for decryption of the music composite content (Cf),
wherein the storage section (2, 4) the file of the composite music content (Cf) is stored such that the plurality of the content materials (Mc1, Mc2) are arranged in orders predetermined correspondingly to different capabilities required for using the content materials, wherein the usable content material (Mc1, Mc2) arranged at a particular order predetermined in correspondence to the capability of the music apparatus is automatically identified,
and wherein it is determined whether each of the plurality of the content materials (Mc1, Mc2) matches with the capability of the music apparatus so as to identify the usable content material among the plurality of the content materials.

## Patentansprüche

1. Musikvorrichtung, die eine Fähigkeit hat, einen zusammengesetzten Musikinhalt (Cf) zu verwenden, aufweisend:
einen Speicherabschnitt (2, 4), der dazu ausgelegt ist, eine Datei des zusammengesetzten Musikinhalts (Cf) zu speichern, der aus mehreren Inhaltsmaterialien (Mc1, Mc2) besteht, und
einen Verwendungsabschnitt, der dazu ausgelegt ist, nur ein verwendbares Inhaltsmaterial (Mc1, Mc2) aus den mehreren Inhaltsmaterialien (Mc1, Mc2) zu verwenden, das zur Fähigkeit der Musikvorrichtung passt, und nicht ein nicht verwendbares Inhaltsmaterial (Mc1, Mc2) aus den mehreren Inhaltsmaterialien (Mc1, Mc2) zu verwenden, das nicht zur Fähigkeit der Musikvorrichtung passt,
**dadurch gekennzeichnet, dass**
jedes der Inhaltsmaterialien (Mc1, Mc2) einzeln verschlüsselt ist;
die Musikvorrichtung ferner aufweist
einen Entschlüsselungsabschnitt und
einen Erkennungsabschnitt, der dazu ausgelegt ist, das verwendbare Inhaltsmaterial (Mc1, Mc2) aus den mehreren Inhaltsmaterialien (Mc1, Mc2) des in dem Speicherabschnitt (2, 4) gespeicherten zusammengesetzten Musikinhalts (Cf) zu erkennen, um den Entschlüsselungsabschnitt so zu steuern, dass er selektiv nur das von dem Erkennungsabschnitt erkannte verwendbare Inhaltsmaterial (Mc1, Mc2) entschlüsselt, während er das nicht verwendbare Inhaltsmaterial (Mc1, Mc2) nicht entschlüsselt, wodurch eine schnelle Verwendung des zusammengesetzten Musikinhalts (Cf) durch den Verwendungsabschnitt ermöglicht wird, während die von dem Entschlüsselungsabschnitt zur Entschlüsselung des zusammengesetzten Musikinhalts (Cf) benötigte Zeit verkürzt wird,
wobei der Speicherabschnitt (2, 4) dazu ausgelegt ist, die Datei des zusammengesetzten Musikinhalts (Cf) zu speichern, so dass die mehreren Inhaltsmaterialien (Mc1, Mc2) in Reihenfolgen angeordnet sind, die entsprechend verschiedenen zum Verwenden der Inhaltsmaterialien benötigten Fähigkeiten vorbestimmt sind, wobei der Erkennungsabschnitt dazu ausgelegt ist, das verwendbare Inhaltsmaterial (Mc1, Mc2), das in einer vorbestimmten Reihenfolge angeordnet ist, die in Entsprechung zu der Fähigkeit der Musikvorrichtung vorbestimmt ist, automatisch zu erkennen,
und wobei der Erkennungsabschnitt dazu ausgelegt ist, bei jedem der mehreren Inhaltsmaterialien (Mc1, Mc2) festzustellen, ob es zu der Fähigkeit der Musikvorrichtung passt, um so das verwendbare Inhaltsmaterial aus den mehreren Inhaltsmaterialien zu erkennen.

2. Musikvorrichtung gemäß Anspruch 1, wobei der Speicherabschnitt dazu ausgelegt ist, den zusammengesetzten Musikinhalt zu speichern, der aus den mehreren Inhaltsmaterialien besteht, die mit einem Codeschlüssel verschlüsselt sind, der für die mehreren Inhaltsmaterialien gleich eingestellt ist.

3. Musikvorrichtung gemäß Anspruch 1, wobei der Speicherabschnitt dazu ausgelegt ist, den zusammengesetzten Musikinhalt zu speichern, der aus den mehreren Inhaltsmaterialien besteht, die mit Codeschlüsseln verschlüsselt sind, die für die mehreren Inhaltsmaterialien unterschiedlich eingestellt sind.

4. Programm zur Verwendung in einer Musikvorrichtung, die einen Prozessor (1) und einen Speicherabschnitt (2, 4) hat, in dem eine Datei aus einem zusammengesetzten Musikinhalt (Cf) gespeichert ist, der aus mehreren Inhaltsmaterialien (Mc1, Mc2) besteht, wobei die Inhaltsmaterialien (Mc1, Mc2) des in dem Speicherabschnitt (2, 4) gespeicherten zusammengesetzten Musikinhalts (Cf) ein verwendbares Inhaltsmaterial (Mc1, Mc2), das von der Musikvorrichtung verwendet werden kann, und ein nicht verwendbares Inhaltsmaterial (Mc1, Mc2) beinhalten, das von der Musikvorrichtung nicht verwendet wird, wobei das Programm von dem Prozessor (1) dazu ausführbar ist, die Musikvorrichtung zu veranlassen, ein Verfahren auszuführen, das den Schritt des Verwendens des entschlüsselten verwendbaren Inhaltsmaterials beinhaltet;
**dadurch gekennzeichnet, dass**
jedes der Inhaltsmaterialien (Mc1, Mc2) einzeln verschlüsselt ist, wobei die Musikvorrichtung dazu fähig ist, mindestens eines der Inhaltsmaterialien (Mc1, Mc2) des zusammengesetzten Musikinhalts (Cf) nach der Entschlüsselung zu verwenden; und
dadurch dass das Verfahren ferner die folgenden Schritte aufweist:
Erkennen des verwendbaren Inhaltsmaterials (Mc1, Mc2) aus den mehreren Inhaltsmaterialien (Mc1, Mc2) des in dem Speicherabschnitt (2, 4) gespeicherten zusammengesetzten Musikinhalts (Cf);
selektives Entschlüsseln nur des erkannten verwendbaren Inhaltsmaterials (Mc1, Mc2), während das nicht verwendbare Inhaltsmaterial (Mc1, Mc2) nicht entschlüsselt wird, wodurch eine schnelle Verwendung des zusammengesetzten Musikinhalts (Cf) ermöglicht wird, während die zur Entschlüsselung des zusammengesetzten Musikinhalts (Cf) benötigte Zeit verkürzt wird,
wobei in dem Speicherabschnitt (2, 4) die Datei des zusammengesetzten Musikinhalts (Cf) in einer solchen Weise gespeichert ist, dass die mehreren Inhaltsmaterialien (Mc1, Mc2) in Reihenfolgen angeordnet sind, die entsprechend verschiedenen zum Verwenden der Inhaltsmaterialien benötigten Fähigkeiten vorbestimmt sind, wobei das verwendbare Inhaltsmaterial (Mc1, Mc2), das in einer vorbestimmten Reihenfolge angeordnet ist, die in Entsprechung zu der Fähigkeit der Musikvorrichtung vorbestimmt ist, automatisch erkannt wird,
und wobei bei jedem aus den mehreren Inhaltsmaterialien (Mc1, Mc2) festgestellt wird, ob es zu der Fähigkeit der Musikvorrichtung passt, um so das verwendbare Inhaltsmaterial aus den mehreren Inhaltsmaterialien zu erkennen.

5. Verfahren zum Verwenden eines zusammengesetzten Musikinhalts (Cf) in einer Musikvorrichtung, die einen Speicherabschnitt (2, 4) aufweist, in dem eine Datei eines zusammengesetzten Musikinhalts (Cf) gespeichert ist, der aus mehreren Inhaltsmaterialien (Mc1, Mc2) besteht, wobei die Inhaltsmaterialien des zusammengesetzten Musikinhalts (Cf) ein verwendbares Inhaltsmaterial (Mc1, Mc2), das von der Musikvorrichtung verwendet werden kann, und ein nicht verwendbares Inhaltsmaterial (Mc1, Mc2) beinhalten, das von der Musikvorrichtung nicht verwendet wird, wobei das Verfahren den Schritt des Verwendens des entschlüsselten verwendbaren Inhaltsmaterials beinhaltet;
**dadurch gekennzeichnet, dass**
jedes der Inhaltsmaterialien (Mc1, Mc2) einzeln verschlüsselt ist, wobei die Musikvorrichtung dazu fähig ist, mindestens eines der Inhaltsmaterialien (Mc1, Mc2) des zusammengesetzten Musikinhalts (Cf) nach der Entschlüsselung zu verwenden; und
dadurch dass das Verfahren ferner die folgenden Schritte aufweist:
Erkennen des verwendbaren Inhaltsmaterials (Mc1, Mc2) aus den mehreren Inhaltsmaterialien (Mc1, Mc2) des in dem Speicherabschnitt (2, 4) gespeicherten zusammengesetzten Musikinhalts (Cf);
selektives Entschlüsseln nur des erkannten verwendbaren Inhaltsmaterials (Mc1, Mc2), während das nicht verwendbare Inhaltsmaterial (Mc1, Mc2) nicht entschlüsselt wird, wodurch eine schnelle Verwendung des zusammengesetzten Musikinhalts (Cf) ermöglicht wird, während die zur Entschlüsselung des zusammengesetzten Musikinhalts (Cf) benötigte Zeit verkürzt wird,
wobei in dem Speicherabschnitt (2, 4) die Datei des zusammengesetzten Musikinhalts (Cf) in einer solchen Weise gespeichert ist, dass die mehreren Inhaltsmaterialien (Mc1, Mc2) in Reihenfolgen angeordnet sind, die entsprechend verschiedenen zum Verwenden der Inhaltsmaterialien benötigten Fähigkeiten vorbestimmt sind, wobei das verwendbare Inhaltsmaterial (Mc1, Mc2), das in einer vorbestimmten Reihenfolge angeordnet ist, die in Entsprechung zu der Fähigkeit der Musikvorrichtung vorbestimmt ist, automatisch erkannt wird,
und wobei bei jedem aus den mehreren Inhaltsmaterialien (Mc1, Mc2) festgestellt wird, ob es zu der Fähigkeit der Musikvorrichtung passt, um so das verwendbare Inhaltsmaterial aus den mehreren Inhaltsmaterialien zu erkennen.

## Revendications

1. Appareil de musique présentant une capacité d'utiliser un contenu musical composite (Cf), comprenant :
une section de stockage (2, 4) qui est adaptée pour stocker un fichier du contenu musical composite (Cf) composé d'une pluralité de matériaux de contenu (Mc1, Mc2), et
une section d'utilisation qui est adaptée pour utiliser seulement un matériau de contenu utilisable (Mc1, Mc2), qui correspond à la capacité de l'appareil de musique, parmi la pluralité des matériaux de contenu (Mc1, Mc2) et pour ne pas utiliser un matériau de contenu inutilisable (Mc1, Mc2), qui ne correspond pas à la capacité de l'appareil de musique, parmi la pluralité des matériaux de contenu (Mc1, Mc2),
**caractérisé**
**en ce que** chacun des matériaux de contenu (Mc1, Mc2) est chiffré individuellement ;
ledit appareil de musique comprend en outre :
une section de déchiffrement, et
une section d'identification qui est adaptée pour identifier le matériau de contenu utilisable (Mc1, Mc2), parmi la pluralité des matériaux de contenu (Mc1, Mc2) du contenu musical composite (Cf) stocké dans la section de stockage (2, 4), pour commander la section de déchiffrement pour déchiffrer sélectivement seulement le matériau de contenu utilisable (Mc1, Mc2) identifié par la section d'identification, sans déchiffrer le matériau de contenu inutilisable (Mc1, Mc2), permettant ainsi l'utilisation rapide du contenu musical composite (Cf) par la section d'utilisation tout en réduisant le temps requis pour le déchiffrement du contenu composite musical (Cf) par la section de déchiffrement,
dans lequel la section de stockage (2, 4) est adaptée pour stocker le fichier du contenu musical composite (Cf) de sorte que la pluralité des matériaux de contenu (Mc1, Mc2) sont agencés dans des ordres prédéterminés en correspondance à des capacités différentes requises pour utiliser les matériaux de contenu, dans lequel la section d'identification est adaptée pour identifier automatiquement le matériau de contenu utilisable (Mc1, Mc2) agencé dans un ordre particulier prédéterminé en correspondance à la capacité de l'appareil de musique,
et dans lequel la section d'identification est adaptée pour déterminer si chacun parmi la pluralité des matériaux de contenu (Mc1, Mc2) correspond à la capacité de l'appareil de musique afin d'identifier le matériau de contenu utilisable parmi la pluralité des matériaux de contenu.

2. Appareil de musique selon la revendication 1, dans lequel la section de stockage est adaptée pour stocker le contenu musical composite composé de la pluralité des matériaux de contenu qui sont chiffrés par une clef de code réglée communément à la pluralité des matériaux de contenu.

3. Appareil de musique selon la revendication 1, dans lequel la section de stockage est adaptée pour stocker le contenu musical composite composé de la pluralité des matériaux de contenu qui sont chiffrés par des clefs de code réglées différemment pour la pluralité des matériaux de contenu.

4. Programme pour l'utilisation dans un appareil de musique comportant un processeur (1) et une section de stockage (2, 4) stockant un fichier d'un contenu musical composite (Cf) composé d'une pluralité de matériaux de contenu (Mc1, Mc2), les matériaux de contenu (Mc1, Mc2) du contenu musical composite (Cf) stocké dans la section de stockage (2, 4) comprenant un matériau de contenu utilisable (Mc1, Mc2) qui peut être utilisé par l'appareil de musique et un matériau de contenu inutilisable (Mc1, Mc2) qui n'est pas utilisé par l'appareil de musique, le programme étant exécutable par le processeur (1) pour faire en sorte que l'appareil de musique réalise un procédé comprenant l'étape de l'utilisation du matériau de contenu utilisable déchiffré ;
**caractérisé**
**en ce que** chacun des matériaux de contenu (Mc1, Mc2) est chiffré individuellement, l'appareil de musique étant capable d'utiliser au moins un des matériaux de contenu (Mc1, Mc2) du contenu musical composite (Cf) après le déchiffrement ; et
**en ce que** le procédé comprend en outre les étapes de :
l'identification du matériau de contenu utilisable (Mc1, Mc2) parmi la pluralité des matériaux de contenu (Mc1, Mc2) du contenu musical composite (Cf) stocké dans la section de stockage (2, 4) ;
le déchiffrement sélectif seulement du matériau de contenu utilisable identifié (Mc1, Mc2) sans déchiffrer le matériau de contenu inutilisable (Mc1, Mc2), permettant ainsi l'utilisation rapide du contenu musical composite (Cf) tout en réduisant le temps requis pour le déchiffrement du contenu composite musical (Cf),
dans lequel, dans la section de stockage (2, 4), le fichier du contenu musical composite (Cf) est stocké de sorte que la pluralité des matériaux de contenu (Mc1, Mc2) sont agencés dans des ordres prédéterminés en correspondance à des capacités différentes requises pour utiliser les matériaux de contenu, dans lequel le matériau de contenu utilisable (Mc1, Mc2) agencé dans un ordre particulier prédéterminé en correspondance à la capacité de l'appareil de musique est automatiquement identifié,
et dans lequel il est déterminé si chacun parmi la pluralité des matériaux de contenu (Mc1, Mc2) correspond à la capacité de l'appareil de musique afin d'identifier le matériau de contenu utilisable parmi la pluralité des matériaux de contenu.

5. Procédé d'utilisation d'un contenu musical composite (Cf) dans un appareil de musique comportant une section de stockage (2, 4) stockant un fichier d'un contenu musical composite (Cf) composé d'une pluralité de matériaux de contenu (Mc1, Mc2), les matériaux de contenu du contenu musical composite (Cf) comprenant un matériau de contenu utilisable (Mc1, Mc2) qui peut être utilisé par l'appareil de musique et un matériau de contenu inutilisable (Mc1, Mc2) qui n'est pas utilisé par l'appareil de musique, le procédé comprenant l'étape de l'utilisation du matériau de contenu utilisable déchiffré ;
**caractérisé**
**en ce que** chacun des matériaux de contenu (Mc1, Mc2) est chiffré individuellement, l'appareil de musique étant capable d'utiliser au moins un des matériaux de contenu (Mc1, Mc2) du contenu musical composite (Cf) après le déchiffrement, et
**en ce que** le procédé comprend en outre les étapes de :
l'identification du matériau de contenu utilisable (Mc1, Mc2) parmi la pluralité des matériaux de contenu (Mc1, Mc2) du contenu musical composite (Cf) stocké dans la section de stockage (2, 4) ;
le déchiffrement sélectif seulement du matériau de contenu utilisable identifié (Mc1, Mc2) sans déchiffrer le matériau de contenu inutilisable (Mc1, Mc2), permettant ainsi l'utilisation rapide du contenu musical composite (Cf) tout en réduisant le temps requis pour le déchiffrement du contenu composite musical (Cf),
dans lequel, dans la section de stockage (2, 4), le fichier du contenu musical composite (Cf) est stocké de sorte que la pluralité des matériaux de contenu (Mc1, Mc2) sont agencés dans des ordres prédéterminés en correspondance à des capacités différentes requises pour utiliser les matériaux de contenu, dans lequel le matériau de contenu utilisable (Mc1, Mc2) agencé dans un ordre particulier prédéterminé en correspondance à la capacité de l'appareil de musique est automatiquement identifié,
et dans lequel il est déterminé si chacun parmi la pluralité des matériaux de contenu (Mc1, Mc2) correspond à la capacité de l'appareil de musique afin d'identifier le matériau de contenu utilisable parmi la pluralité des matériaux de contenu.
